# EUROPEAN PATENT APPLICATION

(11) **EP 2 431 598 A1**
(43) Date of publication of application: **21.03.2012**
(21) Application number: 10177853.8
(22) Date of filing: 21.09.2010
(51) Int. Cl.: F02G 1/055, F23C 7/00, F23C 9/00, F23C 9/08, F23D 14/66

(54) **Combustion apparatus for a Stirling engine**

(71) Applicant: Stirling DK Aps, 2800 Kgs. Lyngby (DK)
(72) Inventor: Marinitsch, Gerald, 8402 Werndorf (AT); Bovin, Jonas, 2830 Virum (DK)
(74) Representative: Tonnesen, Bo

(57) **Abstract**

The invention relates to a combustion method and a Combined Heat and Power (CHP) plant operated by said method, the plant comprising a combustion chamber unit (1) having a combustion chamber (3), a burner (4) and an air preheater (5), and further comprising a Stirling process unit (2) including a heater (6).
Said plant is characterized in the combustion chamber (3) defining a reaction zone (R) between said burner (4) and said heater (6) and being configured to allow flue gas, after having exchanged heat energy with said heater (6), to return in a backflow along the inner wall (7) of the combustion chamber (3) back to the burner end, whereby a first flow of the backflow gas enters the reaction zone (R) and a second flow of the backflow gas continues in a flue gas passage (8) containing said air preheater (5) for combustion air to the burner (4) and exits through a flue gas exit (9).

## Description

### Field of the invention

The invention relates to a combustion process plant comprising a combustion chamber unit having a combustion chamber, a burner and an air preheater; and further comprising a power generating unit including a heater

### Background of the invention

Environmental issues and especially low emissions of Combined Heat and Power (CHP) plants are very important to society In order to reach a high electrical efficiency of a Stirling process CHP plant the heat source needs to have a high temperature in the range of 1200°C-1400°C., Usually the heat is generated in a combustion process Furthermore it is necessary in order to reach high efficiencies at the CHP plant to use preheated air for the combustion This makes it difficult to keep the emissions such as NOₓ on a low level. Basically NOₓ (thermal NOx) is formed in the combustion chamber in hot spots wherein the temperature is above 1500°C It is quite difficult to avoid hot spots in the flame by the use of ordinary burners. In order to avoid this problem it is possible to operate the combustion highly turbulent at low oxygen levels without a flame. The low-oxygen combustion without a flame is a combustion mode, in which combustion products (flue gas) are re-circulated and mixed into the fresh incoming fuel and air streams with high turbulence This reduces the concentration of the reactants thereby reducing the reaction rate through avoiding the formation of excessive temperature zones In order to achieve such low-oxygen combustion for a Stirling process CHP plant a specific design of the combustion chamber and burner as well as a defined arrangement of the plant components (burner, combustion chamber, Stirling process device, air preheater) would be required.

### Summary of the invention

Accordingly it is the aim of the invention to develop a combustion method and to design a plant of the type mentioned, wherein a high efficiency rate is obtained and wherein the plant is less space demanding than the case is with similar plants

According to the invention a combustion method of providing a combustion process output to an energy generating machine comprises the following steps:
providing a combustion chamber for a low-oxygen reaction process, said chamber having side walls defining a longitudinal space of round or polygonal form, and end walls, whereof one end wall carries a burner and inlet openings for different gasses at the upstream end of the chamber and a downstream end wall fitted with a heat absorber having a working media,
providing a feed of fuel,
providing a feed of compressed air preheated by flue gas in contactless counter flow;
feeding said fuel and combustion gas through the upstream end wall by the compressed air drawing the fuel into the chamber in a swirl and intermixing with a backflow flue gas to generate an immediate low-oxygen reaction between the fuel, the compressed air and the flue gas,
before backflowing the flue gas, heat of the flue gas is transferred to the working media of the heat absorber acting as a heater for a power generating machine; whereby the flue gas having submitted thermal energy to the working media of the heater backflows along the inner side walls of the chamber to the upstream end;
the flue gas divides into a first flow re-entering the reaction zone and a second flow directed downstream along the outer surface of the combustion chamber in a preheater space containing an air preheater for air to be fed to the burner, and further to a flue gas exit leading to the surroundings

A Stirling process CHP plant according to the invention and adapted to be used with the abovementioned method, comprises a combustion unit having a combustion chamber, a burner and an air preheater; and a Stirling process unit including a heater connected to a Stirling process device, wherein the energy input from the heater is converted into mechanical energy driving the Stirling process, and is characterized in the combustion chamber defining a reaction zone between said burner and said heater and being configured to allow flue gas, after having exchanged thermal energy with said heater, to return in a backflow along the inner wall of the combustion chamber back to the burner end, whereby a first flow of the backflow gas re-enters the combustion zone and a second flow of the backflow gas continues in a flue gas passage containing said air preheater for combustion air to the burner, and exits through a flue gas exit

If required to keep the backflow of flue gas inside the combustion chamber separate from the flue gas emanating from the reaction zone a ring wall can be provided concentrically within the combustion chamber defining a radially outer annular space for gas backflow separate of the reaction zone

The annular space defined by the ring wall could also be divided into several longitudinal channels extending from a downstream end of the combustion chamber to an upstream end thereof

In order to guide the first part of the backflow gas into the burner end of the combustion chamber again, the ring wall is provided with at least one opening leading into the adjacent burner area, whereby the flue gas is mixed with the fuel and combustion air when entering the reaction zone.

The combustion air is pressurized by the use of an external compressor before entering the air preheater, and then the preheated combustion air is injected into the combustion chamber thereby drawing the fuel and flue gas into said chamber This leads to a diluted oxidation reaction taking place in the reaction zone without a flame.

In a preferred embodiment of the invention the air preheater is a tube preheater, which advantageously offers a large heat exchanging surface area to be swept by the part of backflow flue gas leaving through the flue gas passage and the flue gas exit

Preferably the heater in the stirling process unit has an internal working media e.g. helium, to receive thermal energy from the flue gas in heat exchange in order for said medium to drive a stirling process generating a mechanical and/or electrical power output

In order to obtain a very high efficiency rate a compact design is required, and in an advantageous embodiment of the invention the combustion unit and the Stirling process unit are in an integral configuration. This represents a space saving feature of the invention

Hot spots, i.e. areas in the reaction zone showing excessive temperatures, must be avoided by maintaining a "diluted" low-oxygen regime in the reaction zone by adding enough flue gas to have a stable, reaction process without flame with a a suitable stoichiometric flame temperature throughout said zone According to the invention the oxygen content is kept low by adding the oxygen-poor flue gas.

### Brief description of the drawings

Fig 1 is a sectional view of a first embodiment of a combustion process plant according to the invention,
Fig 2 is a sectional view of a second embodiment of a combustion process plant according to the invention

### Detailed description of the invention

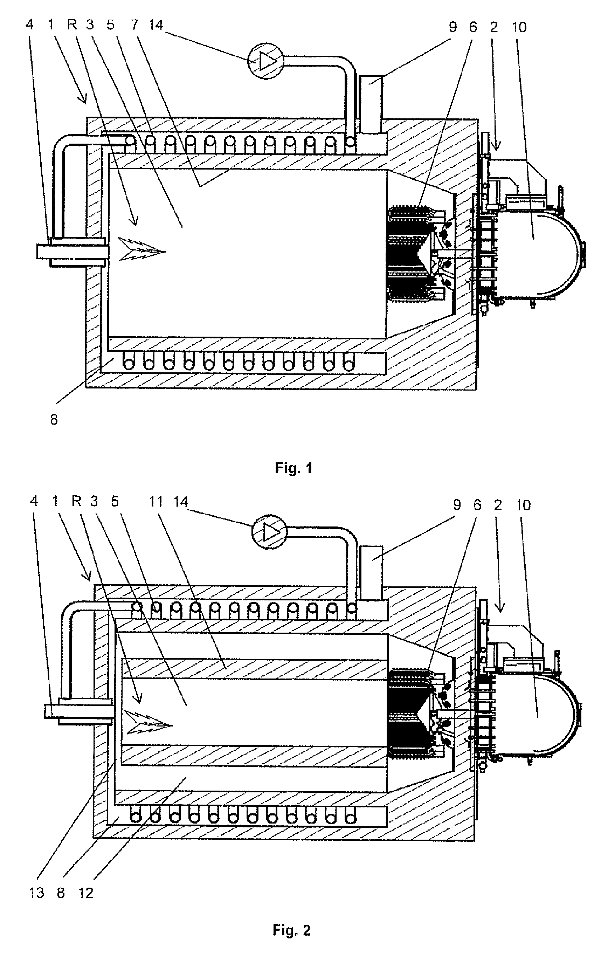

A first embodiment of the invention is presented in Fig. 1 showing a Stirling process CHP plant comprising a combustion unit 1 and a Stirling process unit 2. The combustion unit 1 has a combustion chamber 3 with an inner wall 7, a burner 4 and a combustion air preheater 5, and the Stirling process unit 2 includes a heater 6 and a Stirling engine 10

In the present embodiment said two units (1, 2) are built together in a one-piece configuration in order to create a very compact design with the air preheater 5 enveloping the combustion chamber 3 thereby keeping thermal losses to a minimum

In the left hand side, the burner 4 delivers fuel to a reaction zone R in the combustion chamber 3. A jet of fresh combustion air is injected at the burner 4 and creates high turbulence drawing in fuel and instantly intermixing the fuel and combustion air with the flue gas for the oxidation process to run, the oxygen-poor flue gas "diluting" the mixture to avoid excessive temperatures in the reaction process and consequently avoiding the thermal NOₓ formation. The flue gas having submitted thermal energy to the heater 6 follows the inner wall 7 of the combustion chamber 3 in direction of the burner end 4 to become part of the combustion reaction

In a preferred embodiment shown in fig 2 a ring wall 11 is dividing the combustion chamber 3 in a zone R for the reaction process inside the wall 11 and outside of said wall 1 an annular space 12 for spent flue gas in a backflow separate of the reaction zone R in order to enter said combustion zone R via openings 13 in the upstream end of the ring wall 1 as a low-fuel and low-oxygen reactant to be intermixed with fresh combustion air and fuel

Downstream of the reaction zone R flue gas meets the heater 6, wherein flue gas is converting its heat content by expansion of the heater working media e.g helium to drive the Stirling process in the Stirling engine 10.

The fresh combustion air is pressurized in a compressor 14 before entering the air preheater 5, and being pressurized as well as preheated the combustion air enters the combustion chamber 3 in an air jet.

The flue gas having submitted heat energy to the heater 6 and arriving at the upstream end of the combustion chamber 3 is divided in a first part going to the reaction zone R and a second part going into a passage 8 to a flue gas exit 9.

The passage 8 accommodates a tube preheater 5, but any suitable type of preheater can be used, the outer surfaces of said preheater 5 being swept by the hot flue gas.

The manner in which the energy submitted to the heater 6 is utilized in the Stirling engine is well known and needs no further explanation

The housing containing the structural units 1, 2 is embodied in one single housing, but for mounting purposes said housing could also be a multi-part housing as long as the flow distances are kept short in a compact configuration.

## Claims

1. Method of providing a combustion process output to an energy generating machine, comprising the following steps:
providing a combustion chamber for a low-oxygen reaction process, said chamber having side walls defining a longitudinal space of round or polygonal form, and end walls, whereof one end wall carries a burner and inlet openings for different gasses at the upstream end of the chamber and a downstream end wall fitted with a heat absorber having a working media,
providing a feed of fuel,
providing a feed of compressed air preheated by flue gas in contactless counter flow;
feeding said fuel and combustion gas through the upstream end wall by the compressed air drawing the fuel into the chamber in a swirl and intermixing with a backflow flue gas to generate an immediate low-oxygen reaction between the fuel, the compressed air and the flue gas;
before backflowing the flue gas, heat of the flue gas is transferred to the working media of the heat absorber acting as a heater for a power generating machine;
whereby the flue gas having submitted thermal energy to the working media of the heater backflows along the inner side walls of the chamber to the upstream end;
the flue gas divides into a first flow entering the reaction zone and a second flow directed downstream along the outer surface of the combustion chamber in a preheater space containing an air preheater for compressed air to be fed to the burner,
and further to a flue gas exit leading to the surroundings.

2. Combustion process plant to carry out the method according to claim 1, comprising a combustion unit (1) having a combustion chamber (3), a burner (4) and an air preheater (5), and further comprising a power generating unit (2) including a heater (6), **characterized in** the combustion chamber (3) defining a reaction zone (R) between said burner (4) and said heater (6) and being configured to allow flue gas, after having exchanged thermal energy with said heater (6), to return in a backflow along the inner wall (7) of the combustion chamber (3) back to the burner (4), whereby a first flow of the backflow gas enters the reaction zone (R) and a second flow of the backflow gas continues in a flue gas passage (8) containing said air preheater (5) for combustion air to the burner (4), and exits through a flue gas exit (9)

3. Plant according to claim 2, further comprising an inner ring wall (11) defining in the combustion chamber (3) an annular space (12) for backflow flue gas separate of the reaction zone (R)

4. Plant according to claim 3, wherein the annular space (12) defined around the ring wall (11) is divided into one or several longitudinal channels leading flue gas from a downstream end of the combustion chamber (3) to an upstream end thereof.

5. Plant according to claim 3 or 4, wherein the ring wall (11) is provided with at least one opening (13) leading into the burner area to let in backflow flue gas..

6. Plant according to one of claims 2-5, wherein fresh combustion air is pressurized by the use of an external compressor (14) before entering the air preheater (5)

7. Plant according to one of claims 2-6, wherein the combustion air as preheated in the preheater (5) is allowed into the combustion chamber (3) thereby drawing fuel into said chamber (3) and intermixing with backflow flue gas, and wherein a low-oxidation reaction in the reaction zone (R) is maintained

8. Plant according to one of claims 2-7, wherein the air preheater (5) has a large surface area to be swept by the second part of backflow gas in said flue gas passage (8)

9. Plant according to one of claims 2-8, wherein said heater (6) receives thermal energy from the flue gas in order to drive a Stirling process generating a mechanical and/or electrical power output

10. Plant according to one of claims 2-9, wherein the combustion unit (1 ) and the Stirling process unit (2) are in an integral configuration,

11. Plant according to one of claims 2-10, wherein the reaction process in the combustion chamber (3) is an oxidation without flame provided by high turbulence and adjustment of the amount of flue gas entering the reaction zone in order to maintain low oxygen content of the mixture of fuel/flue gas/combustion air.
